# EUROPEAN PATENT SPECIFICATION

(11) **EP 2 573 147 B1**
(45) Date of publication and mention of the grant of the patent: **09.12.2015**
(21) Application number: 11783554.6
(22) Date of filing: 17.05.2011
(51) Int. Cl.: C09J 5/02, C09J 7/02, B32B 27/00, B32B 27/30

(54) **PRESSURE-SENSITIVE ADHESIVE SHEET**
DRUCKEMPFINDLICHE KLEBEFOLIE
FEUILLE ADHÉSIVE SENSIBLE À LA PRESSION

(30) Priority: 17.05.2010 JP 2010113663
(43) Date of publication of application: 27.03.2013
(73) Proprietor: Nitto Denko Corporation, Osaka 567-8680 (JP)
(72) Inventor: ISEKI, Azusa, Ibaraki-shi Osaka 567-8680 (JP); NAITO, Tomonari, Ibaraki-shi Osaka 567-8680 (JP); KUBO, Asami, Ibaraki-shi Osaka 567-8680 (JP); SHIRAI, Mitsuyoshi, Ibaraki-shi Osaka 567-8680 (JP)
(74) Representative: Grünecker Patent- und Rechtsanwälte PartG mbB
(86) International application number: PCT/JP2011/061324
(87) International publication number: WO 2011/145620

(56) References cited:
- EP-A2- 1 188 574
- JP-A- S60 248 711
- JP-A- 2002 356 659
- JP-A- 2003 205 572
- JP-A- 2004 303 313
- JP-A- 2005 162 851
- JP-A- 2008 009 156
- JP-A- 2011 026 463
- JP-B2- 2 837 194

## Description

### Technical Field

The present invention relates to a pressure-sensitive adhesive sheet, to be specific, to a pressure-sensitive adhesive sheet widely used in various industrial fields.

### Background Art

Conventionally, it has been known that a pressure-sensitive adhesive sheet has been widely used in various industrial fields, and comprises a substrate and a pressure-sensitive adhesive layer laminated thereon, and allows a primer layer to be interposed between the substrate and the pressure-sensitive adhesive layer for the purpose of improving the anchoring force.

For example, a primer composition obtained by blending an aqueous colloidal silica into an ethylamino binder (an ethyleneimine-based binder) 3has been proposed, and the pressure-sensitive adhesive sheet in which the primer layer formed from the primer composition is interposed between the substrate and the pressure-sensitive adhesive layer has been proposed (ref: for example, the following Patent Document 1).

### Prior Art Document

### Patent Document

Patent Document 1: Japanese Unexamined Patent Publication No. 2000-327955 JP 2002 356659 A, EP 1188574 A2, JP S60 248711 A, JP 2003 205572 A and JP 2005 162851 A also disclose adhesive sheets.

### Summary of the Invention

### Problems to be solved by the Invention

In recent years, the pressure-sensitive adhesive sheet is required to have a further excellent anchoring force. However, in the pressure-sensitive adhesive sheet described in the above-described Patent Document 1, the anchoring force thereof may be insufficient.

Among all, the anchoring force of the pressure-sensitive adhesive sheet is easily reduced under a high temperature and high humidity atmosphere, so that an excellent humidity resistance is required.

It is an object of the present invention to provide a pressure-sensitive adhesive sheet having an excellent anchoring force and an excellent humidity resistance, and a primer composition for forming a primer layer which is included in the pressure-sensitive adhesive sheet.

### Solution to the Problems

In order to achieve the above-described object, a pressure sensitive adhesive sheet in accordance with claim 1 comprises: a substrate, a primer layer laminated on the surface of the substrate and formed from a primer composition, and a pressure-sensitive adhesive layer laminated on the surface of the primer layer, wherein the primer composition comprises: an acrylic polymer which contains, as the primary monomer component, an alkyl (meth)acrylate containing an alkyl group having 1 to 30 carbon atoms, and particles.

In the pressure sensitive adhesive sheet of the present invention, it is preferable that the mixing ratio of the particles with respect to 100 parts by weight of the solid content of the acrylic polymer is 25 to 200 parts by weight.

In the pressure sensitive adhesive sheet of the present invention, it is preferable that the average particle size of each of the particles is 200 nm or less.

In the pressure sensitive adhesive sheet of the present invention, it is preferable that the acrylic polymer is an aqueous dispersion type.

In the pressure-sensitive adhesive sheet of the present invention, it is preferable that the particles are an aqueous dispersion type.

In the pressure-sensitive adhesive sheet of the present invention, it is preferable that the particles are made of at least one inorganic compound selected from the group consisting of silica, alumina, antimony-doped tin oxide, and titanium oxide.

In the pressure-sensitive sheet of the present invention, it is preferable that the pressure sensitive adhesive layer is formed from a pressure-sensitive adhesive composition comprising an acrylic polymer which contains, as the primary monomer component, an alkyl (meth)acrylate containing an alkyl group having 4 to 18 carbon atoms.

### Effect of the Invention

A pressure-sensitive adhesive sheet of the present invention contains an acrylic polymer and particles, so that a pressure-sensitive adhesive sheet of the present invention including a primer layer formed from the primer composition has an excellent anchoring force.

The pressure-sensitive adhesive sheet of the present invention has an excellent humidity resistance, so that it can be used with excellent reliability even under a high temperature and high humidity atmosphere.

### Brief Description of the Drawings

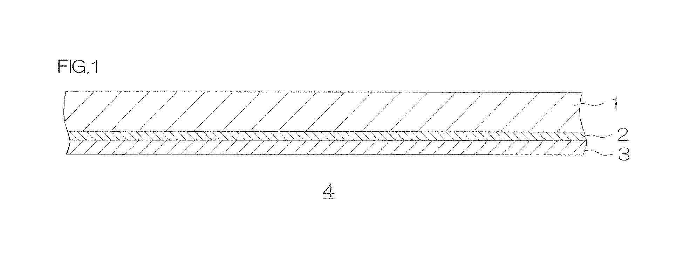

[FIG. 1] FIG. 1 shows an enlarged sectional view for illustrating one embodiment of a pressure-sensitive adhesive sheet of the present invention.

### Embodiment of the Invention

A primer composition of the present invention contains an acrylic polymer obtained by polymerizing a monomer component which contains, as the primary component, an alkyl (meth)acrylate containing an alkyl group having 1 to 30 carbon atoms, and particles.

The alkyl (meth)acrylate containing an alkyl group having 1 to 30 carbon atoms is an alkyl (meth)acrylate (an alkyl methacrylate and/or an alkyl acrylate) in which the alkyl portion thereof is an alkyl group having I to 30 carbon atoms, or preferably a straight chain, a branched chain, or a cyclic alkyl group having 1 to 18 carbon atoms.

Examples of the alkyl (meth)acrylate include methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isopentyl (meth)acrylate, (isoamyl (meth)acrylate), hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, eicosyl (meth)acrylate, cyclopentyl (meth)acrylate, cyclohexyl (meth)acrylate, cycloheptyl (meth)acrylate, and isobornyl (meth)acrylate.

These alkyl (meth)acrylates can be used alone or in combination of two or more. Preferably, an alkyl (meth)acrylate containing an alkyl group having 1 to 3 carbon atoms and an alkyl (meth)acrylate containing an alkyl group having 4 to 18 carbon atoms are used in combination. Alternatively, an alkyl (meth)acrylate containing an alkyl group having 1 to 4 carbon atoms and an alkyl (meth)acrylate containing an alkyl group having 6 to 18 carbon atoms can be also used in combination.

The mixing ratio of the alkyl (meth)acrylate, with respect to 100 parts by weight of the monomer component is 50 parts by weight or more, preferably 80 parts by weight or more, or more preferably 90 parts by weight or more, and is usually 99.99 parts by weight or less.

When the alkyl (meth)acrylates are used in combination, for example, the mixing ratio of the alkyl (meth)acrylate containing an alkyl group having 1 to 3 carbon atoms and the alkyl (meth)acrylate containing an alkyl group having 4 to 18 carbon atoms is, by parts by weight basis, for example, 50/50 to 99/1, or preferably 60/40 to 90/10. Also, for example, the mixing ratio of the alkyl (meth)acrylate containing an alkyl group having 1 to 4 carbon atoms and the alkyl (meth)acrylate containing an alkyl group having 6 to 18 carbon atoms is, by parts by weight basis, for example, 50/50 to 99/1, or preferably 60/40 to 90/10.

A copolymerirable vinyl monomer which is copolymerizable with the above-described alkyl (meth)acrylate can be contained in the monomer component.

An example of the copolymerizable vinyl monomer includes a functional group-containing vinyl monomer.

The functional group-containing monomer is a vinyl monomer other than an amino group-containing vinyl monomer such as aminoethyl (meth)acrylate and N,N-dimethylaminoethyl (meth)acrylate. To be specific, examples of the functional group-containing monomer include a carboxyl group-containing vinyl monomer such as an unsaturated carboxylic acid including (meth)acrylic acid (methacrylic acid and/or acrylic acid), fumaric acid, maleic acid, itaconic acid, crotonic acid, and cinnamic acid, an unsaturated dicarboxylic acid monoester including monomethyl itaconate, monobutyl itaconate, and 2-acryloyloxyethyl phthalate, an unsaturated tricarboxylic acid monoester including 2-methacryloyloxyethyltrimellitic acid and 2-methacryloyloxyethylpyromellitic acid, and a carboxyalkyl acrylate including carboxyethyl acrylate (β-carboxyethyl acrylate) and carboxypentyl acrylate; a hydroxyl group-containing vinyl monomer such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, 4-hydroxymethylcyclohexyl (meth)acrylate, and N-hydroxymethylamide (meth)acrylate; a sulfonic acid group-containing vinyl monomer such as styrenesulfonic acid allylsulfonic acid. 2-(meth)acrylamide-2-methylpropanesulfonic acid, (meth)acrylamidepropanesulfonic acid, sulfopropyl (meth)acrylate, and (meth)acryloyloxynaphthalenesulfonic acid; a phosphoric acid group-containing vinyl monomer such as 2-hydroxyethylacryloyol phosphate; a glycidyl group-containing vinyl monomer such as glycidyl (meth)acrylate and methylglycidyl (meth)acrylate: an amide group-containing vinyl monomer such as (meth)acrylamide; a cyano group-containing vinyl monomer such as acrylonitrile and methacrylonitrile; and a carboxylic acid vinyl ester such as vinyl acetate and vinyl propionate.

The above-described carboxyl group-containing vinyl monomer can be epoxy modified by a glycidyl ether compound (an epoxy compound) such as butyl glycidyl ether, phenyl glycidyl ether, and nonylphenyl glycidyl ether.

In addition, an example of the above-described functional group-containing vinyl monomer includes a polyfunctional monomer. To be specific, examples thereof include a (mono- or poly-) ethylene glycol di(meth)acrylate such as ethylene glycol di(meth)acrylate and a (meth)acrylate monomer of polyhydric alcohol such as neopentyl glycol di(meth)acrylate and trimethylol propane tri(meth)acrylate.

As the copolymerizable vinyl monomer, in addition to the above-described functional group-containing vinyl monomer, an aromatic vinyl monomer such as styrene and vinyl toluene is used.

Furthermore, an example of the copolymerizable vinyl monomer includes an alkoxysilyl group-containing vinyl monomer. Examples thereof include a silicon-based (meth)acrylate monomer and/or a silicon-based vinyl monomer. To be specific, an example of the silicon-based (meth)acrylate monomer includes (meth)acryloyloxyalkyl-trialkoxysilane such as 3-methacryloyloxypropyl-trimethoxysilane.

These copolymerizable vinyl monomers can be used alone or in combination of two or more.

Of the copolymerizable vinyl monomers, preferably, a functional group-containing vinyl monomer and/or an alkoxysilyl group-containing vinyl monomer are/is used, more preferably, a carboxyl group-containing vinyl monomer and/or a silicon-based vinyl monomer are/is used, or particularly preferably, unsaturated carboxylic acid and/or a (meth)acryloyloxyalkyl-trialkoxysilane are/is used.

The mixing ratio of the copolymerizable vinyl monomer with respect to 100 parts by weight of the monomer component is, for example, 50 parts by weight or less, preferably 20 parts by weight or less, or more preferably 10 parts by weight or less, and is usually 0.01 parts by weight or more.

In order to obtain an acrylic polymer by polymerizing the above-described monomer component, the monomer component is blended at the above-described mixing proportion to be polymerized by a polymerization method such as emulsion polymerization (including suspension polymerization), solution polymerization, and bulk polymerization. As the polymerization method, preferably, emulsion polymerization and solution polymerization are used, or more preferably, in view of reducing the environmental burdens, emulsion polymerization is used.

In the emulsion polymerization, for example, a polymerization initiator, an emulsifier, and, if necessary, a chain transfer agent are blended with the above-described monomer component in water to be polymerized. To be more specific, a known emulsion polymerization method such as a collective charging method (a collective polymerization method), a monomer dropping method, or a monomer emulsion dropping method can be used. In the monomer dropping method, continuous dropping or divisional dropping is selected. The reaction conditions and the like are appropriately selected and the polymerization temperature is, for example, 20 to 100°C.

Before, during, or after the blending of the polymerization initiator with respect to the above-described monomer component, the dissolved oxygen concentration in a reaction liquid containing the monomer component can be reduced by nitrogen substitution.

The polymerization initiator is a polymerization initiator which is usually used in the emulsion polymerisation. Examples thereof include an azo-based initiator such as 2,2'-azobisisobutyronitrile (AIBN), 2,2'-azobis(2-methylpropioneamidine) disulfate, 2,2'-azobis(2-methylpropioneamidine) dihydrochloride, 2,2'-azobis(2-amidinopropane) dihydrochloride, 2.2'-azobis[N-(2-carboxyethyl)-2-methylpropioneamidine]hydrate, 2.2-azobis(N,N'-dimethyleneisobutylamidine), and 2,2'-azobis[2-(2-imidazolin-2-yl)propane]dihydrochloride: a persulfate-based initiator such as potassium persulfate (KPS) and ammonium persulfate (APS); a peroxide-based initiator such as benzoyl peroxide, t-butyl hydroperoxide, and hydrogen peroxide; a substituted ethane-based initiator such as phenyl-substituted ethane; a carbonyl-based initiator such as an aromatic carbonyl compound; and a redox-based initiator such as combination of persulfate and sodium hydrogen sulfite and combination of peroxide and sodium ascorbate.

These polymerization initiators can be used alone or in combination of two or more. Of the polymerization initiators, preferably, a persulfate-based initiator and an azo-based initiator are used.

The mixing ratio of the polymerization initiator is appropriately selected and is, for example, 0.05 to 1 parts by weight with respect to 100 parts by weight of the monomer component.

The mulsifier is a known emulsifier which is usually used in the emulsion polymerisastion. Examples thereof include an anionic emulsifier such as sodium lauryl sulfate, ammonium lauryl sulfate, sodium dodecylbenzenesulfonate, polyoxyethylene sodium lauryl sulfate, sodium polyoxyethylene alkyl ether sulfate, ammonium polyoxyethylene alkyl phenyl ether sulfate, sodium polyoxyethylene alkyl phenyl ether sulfate, and sodium polyoxyethylene alkyl sulfosuccinate and a nonionic emulsifier such as polyoxyethylene alkyl ether, polyoxyethylene alkyl phenyl ether, polyoxyethylene fatty acid ester, and polyoxyethylene polyoxypropylene block polymer.

These emulsifiers can be used alone or in combination of two or more. Preferably, an anionic emulsifier is used.

The mixing ratio of the emulsifier with respect to 100 parts by weight of the monomer component is, for example, 0.2 to 10 parts by weight, or preferably 0.5 to 5 parts by weight.

The chain transfer agent is blended as required and adjusts the molecular weight of the acrylic polymer. Examples thereof include mercaptanes such as 1-dodecanethiol.

These chain transfer agents can be used alone or in combination. The mixing ratio thereof with respect to 100 parts by weight of the monomer component is, for example, 0.001 to 0.5 parts by weight.

The acrylic polymer obtained by the emulsion polymerization is prepared as an emulsion (an aqueous dispersion type), that is, an aqueous dispersion of the acrylic polymer.

A pH of the acrylic polymer is adjusted to be, for example, from 7 to 9 by, for example, aqueous ammonia.

The average particle size of the acrylic polymer in the emulsion is, for example, 10 nm to 200 µm, or preferably 20 nm to 100 µm. The average particle size is measured as the volume average particle size of the acrylic polymer.

The concentration of solid content in the aqueous dispersion of the acrylic polymer is, for example, 10 to 90 weight %, or preferably 20 to 80 weight %.

In the solution polymerization, the above-described polymerization initiator, and the above-described chain transfer agent as required, are blended with the above-described monomer component in an organic solvent to be polymerized.

The organic solvent may be an organic solvent which is capable of dissolving the above-described monomer component. Examples thereof include an aliphatic carboxylate such as ethyl acetate and butyl acetate; an aromatic hydrocarbon such as toluene, xylene, and benzene; and an aliphatic hydrocarbon such as pentane, hexane, and heptane. These organic solvents can be used alone or in combination of two or more. Preferably, an aromatic hydrocarbon is used.

In the solution polymerization, the above-described monomer component is polymerized in the organic solvent in the presence of the polymerization initiator.

The acrylic polymer obtained by the solution polymerization is prepared as an organic solvent solution (a solution type), that is, an organic solvent solution of the acrylic polymer.

The concentration of solid content in the organic solvent solution of the acrylic polymer is, for example, 10 to 90 weight %, or preferably 20 to 80 weight %.

In the present invention, an example of a material for forming particles includes an inorganic compound. To be specific, an example of the material for forming particles includes an inorganic compound such as silica (SiO₂ or SiO), alumina (Al₂O₂), antimony-doped tin oxide (ATO), titanium oxide (titania, TiO₂), and zirconia (ZnO₂). Preferably, silica, alumina, antimony-doped tin oxide, and titanium oxide are used. These inorganic compounds can be used alone or in combination of two or more.

The shape of each of the particles is not particularly limited. An example of the shape thereof includes a particle shape or a needle shape. Preferably, a sphere shape is used.

The average maximum length (in the case of the particle shape, the average particle size) of each of the particles is, for example, 200 nm or less, preferably 100 nm or less, or more preferably 60 nm or less, and is usually 0.1 nm or more. The average particle size is a volume average first particle size measured with a dynamic light scattering particle size distribution analyzer.

When the average maximum length of each of the particles is 200 nm or less, a reduction of the anchoring force under a high temperature and high humidity atmosphere can be effectively prevented. When the average maximum length of each of the particles is 100 nm or less, the anchoring force under a room temperature and normal humidity atmosphere can be further improved.

These particles can be used alone or in combination of two or more.

The particles can be prepared as dispersion type particles (to be specific, a colloid) in which the above-described particles are dispersed in a solvent.

Examples of the solvent include water and an organic solvent including an alcohol such as methanol, ethanol, and isopropyl alcohol and ketone such as acetone, methyl ethyl ketone, and methyl isobutyl ketone. Preferably, in view of environmental protection and operating environment, water is used.

That is, the particles can be prepared as, for example, an aqueous colloid (an aqueous dispersion type), that is, an aqueous dispersion of the particles (a hydrosol), or an organic colloid (an organic solvent dispersion type), that is, an organic solvent dispersion of the particles (an organo sol). Preferably, the particles are prepared as an aqueous dispersion of the particles.

The concentration of solid content (particle) in the dispersion of the particles is, for example, 10 to 90 weight %, preferably 10 to 60 weight %, or more preferably 20 to 60 weight %.

As the particles, a commercially available product can be used. To be specific, examples thereof include a silica such as AEROSIL AER 200, AEROSIL AER 300, and AEROSIL AER OX50 (all of the above, manufactured by Nippon Aerosil Co., Ltd.); an aqueous colloidal silica such as ADELITE AT-30, ADELITE AT-40, and ADELITE AT-50 (all of the above, manufactured by Nippon Aerosil Co., Ltd.) and Snowtex S, Snowtex 40, Snowtex 50, MP-1040, and MP-2040 (all of the above, manufactured by NISSAN CHEMICAL INDUSTRIES, LTD.); an alumina sol (a hydrosol) such as Alumina Sol 100 and Alumina Sol 520 (all of the above, manufactured by NISSAN CHEMICAL INDUSTRIES, LTD.); a titania sol (a hydrosol) such as TTO-W-5 (manufactured by ISHIHARA SANGYO KAISHA, LTD.); an ATO aqueous dispersion such as SN-100D; and an organic solvent colloidal silica such as IPA-ST (an isopropanol dispersion silica sol), MEK-ST (a methyl ethyl ketone dispersion silica sol), and MIBK-ST (a methyl isobulyl ketone dispersion silica sol) (all of the above, manufactured by NISSAN CHEMICAL INDUSTRIES, LTD.). AEROSIL and ADELITE are registered trademarks.

The mixing ratio of the particles (the solid content of the particles) with respect to 100 parts by weight of the solid content of the acrylic polymer is, for example, 1 to 300 parts by weight, preferably 5 to 250 parts by weight, more preferably 25 to 200 parts by weight, or particularly preferably above 50 parts by weight, and is 150 parts by weight or less.

When the mixing proportion of the particles is within the above-described range, the anchoring force of a primer layer (described later) formed from the primer composition can be improved.

In order to prepare the primer composition of the present invention, the acrylic polymer and the particles are blended at the above-described mixing proportion. To be specific, the acrylic polymer and the particles are blended to be uniformly stirred.

In the primer composition, among all, when the acrylic polymer is prepared as an emulsion and/or when the particles are prepared as an aqueous dispersion, the concentration of solid content of the primer composition is adjusted to be, for example, 10 to 90 weight %, or preferably 20 to 80 weight % by adding or distilling off water.

FIG. 1 shows an enlarged sectional view for illustrating one embodiment of a pressure-sensitive adhesive sheet of the present invention.

Next, one embodiment of the pressure-sensitive adhesive sheet of the present invention including the primer layer formed from the above-described primer composition is described with reference to FIG. 1.

In FIG. 1, a pressure-sensitive adhesive sheet 4 includes a substrate 1, a primer layer 2 laminated on the surface of the substrate 1, and a pressure-sensitive adhesive layer 3 laminated on the surface of the primer layer 2.

The substrate 1 is formed into, for example, a sheet shape. An example of a material for forming the substrate 1 includes a resin such as a thermoplastic resin including polyester (to be specific, polyethylene terephthalate (PET), and polyethylene naphthalate (PEN)), polyvinyl chloride, polyolefin (polyethylene, and propylene) an ethylene-vinyl acetate copolymer, polyvinyl alcohol, nylon, and thermoplastic polyurethane and a thermosetting resin (a heat resistant resin) including polyimide. An additive can be added to the above-described resin at an appropriate proportion as required. Examples of the additive include fillers, antioxidants, vulcanizing agents, vulcanizing accelerators, and oxidation inhibitors. As the substrate 1, a non-woven fabric formed of the above-described resin is also used.

As the material for forming the substrate 1, preferably, a thermoplastic resin is used.

The surface (the lower surface) of the substrate 1 can be subjected to, for example, a corona treatment.

The thickness of the substrate 1 is, for example, 1 to 1000 µm, or preferably 5 to 500 µm.

The pressure-sensitive adhesive layer 3 is formed from a pressure-sensitive adhesive composition. The pressure-sensitive adhesive composition is formed from, for example, a polymer, preferably the same acrylic polymer as that described above. Preferably, the pressure-sensitive adhesive composition which forms the pressure-sensitive adhesive layer 3 is formed from an acrylic polymer obtained by polymerizing a monomer component which contains, as the primary component, an alkyl (meth)acrylate containing an alkyl group having 4 to 18 carbon atoms.

An additive can be added to the above-described acrylic polymer. Examples of the additive include a silane coupling agent such as aminosilane (to be specific, for example, (alkoxy)aminosilane including γ-aminopropyltrimethoxysilane) ; a tackifier such as a rosin-based tackifier, a terpene-based tackifier, and a petroleum-based tackifier; and a cross-linking agent such as an isocyanate-based cross-linking agent, an epoxy-based cross-linking agent, and a metal ion-based cross-linking agent.

These additives can be used alone or in combination. The mixing ratio of the additive with respect to 100 parts by weight of the solid content of the pressure-sensitive adhesive composition is, for example, 50 parts by weight or less, or preferably 35 parts by weight or less.

In order to obtain the pressure-sensitive adhesive sheet 4, first, the substrate 1 is prepared.

Next, the primer layer 2 is provided on the surface of the substrate 1.

The primer layer 2 is formed from the above-described primer composition.

That is, in order to provide the primer layer 2, for example, the above-described primer composition is directly applied to the surface of the substrate 1 by a known application method to form a coating film. Examples of the known application method include kiss coating, gravure coating, bar coating, spray coating, knife coating, or wire coating.

Thereafter, the coating film is heated at, for example, 80 to 150°C, for several seconds to 10 minutes as required to be dried, so that the primer layer 2 is provided on the surface of the substrate 1.

The thickness of the primer layer 2 provided in this way is, for example, 0.05 to 20 µm, preferably 0.1 to 10 µm, or more preferably 0.1 to 5 µm.

Next, the pressure-sensitive adhesive composition is directly applied to the surface of the primer layer 2 in the same application method as that described above. Thereafter, the applied coating film is heated at, for example, 80 to 150°C, for several seconds to 10 minutes to be dried, so that the pressure-sensitive adhesive layer 3 is provided on the surface of the primer layer 2.

Alternatively, the pressure-sensitive adhesive layer 3 can be provided on the surface of the primer layer 2 by a transfer. To be specific, the pressure-sensitive adhesive layer 3 is laminated on a release sheet (not shown) and the pressure-sensitive adhesive layer 3 is attached to the primer layer 2. Thereafter, the release sheet is peeled from the pressure-sensitive adhesive layer 3.

The thickness of the pressure-sensitive adhesive layer 3 provided in this way is, for example, 1 to 100 µm, preferably 3 to 50 µm, or more preferably 5 to 40 µm.

The pressure-sensitive adhesive sheet 4 formed in this way is used in various industrial fields including, for example, the medical field and the optical field. Preferably, the pressure-sensitive adhesive sheet 4 is used in an electronic equipment.

In the description in FIG. 1, the primer layer 2 is provided on the surface of the substrate 1. Alternatively, for example, the primer layer 2 can be provided on both surfaces (the top surface and the back surface) of the substrate 1.

Examples of the above-described pressure-sensitive adhesive sheet 4 include a pressure-sensitive adhesive film and a pressure-sensitive adhesive tape.

The above-described primer composition contains the acrylic polymer and the particles, so that the pressure-sensitive adhesive sheet 4 including the primer layer 2 formed from the primer composition has an excellent anchoring force.

To be specific, in a peel test to be described later, in the pressure-sensitive adhesive sheet 4, a cohesive failure in which a failure in the pressure-sensitive adhesive layer 3 is confirmed usually occurs. Alternatively, an anchoring failure in which a failure between (at the interfacial surface of) the primer layer 2 and the pressure-sensitive adhesive layer 3 or a failure between (at the interfacial surface of) the primer layer 2 and the substrate 1 is confirmed usually occurs. In the pressure-sensitive adhesive sheet of the present invention, preferably, a cohesive failure occurs.

The pressure-sensitive adhesive sheet 4 has an excellent humidity resistance, so that it can be used in the above-described various industrial fields with excellent reliability even under a high temperature and high humidity atmosphere.

### Examples

The present invention will now be described in more detail by way of Production Examples. Comparative Production Examples, Examples, and Comparative Examples.

### Production Example 1

### (Preparation of Emulsion of Acrylic Polymer)

65.0 parts by weight of butyl acrylate. 34.5 parts by weight of methyl methacrylate, 0.5 parts by weight of methacrylic acid, and 92.2 parts by weight of water were blended in a vessel and 1 parts by weight of an emulsifier (LA-16, anionic-based, manufactured by DAI-ICHI KOGYO SEIYAKU CO., LTD.) was further added thereto. The obtained mixture was forcibly emulsified (pre-emulsified) for 5 minutes with the number of revolutions of 5000 min⁻¹ using a homomixer, so that a monomer pre-emulsion was prepared.

In a reaction vessel equipped with a condenser tube, a nitrogen introducing tube, a thermometer, and a stirrer, a part (10 weight % of the total amount) of the above-described monomer pre-emulsion and 2 parts by weight of the emulsifier (LA-16, anionic-based, manufactured by DAI-ICHI KOGYO SEIYAKU CO., LTD.) were put and further, water was put so that the concentration of solid content after termination of the polymerization was adjusted to be 40 weight %.

Next, 0.03 parts by weight of an initiator (ammonium persulfate) was added to the above-described reaction vessel to be heated at 75°C, so that the monomer component was emulsion polymerized for 1 hour.

Thereafter, 0.07 parts by weight of the initiator (ammonium persulfate) was further added thereto and then, the remaining component (90 weight % of the total amount) of the monomer pre-emulsion was added dropwise into the reaction vessel over 3 hours. Thereafter, the resulting mixture was heated at 75°C, so that the monomer component in the remaining monomer pre-emulsion was emulsion polymerized for 3 hours. Furthermore, then, the temperature of the reaction vessel was retained at 65°C and the remaining monomer component was emulsion polymerized for 3 hours under a current of nitrogen gas.

After termination of the polymerization, the obtained mixture was cooled to room temperature and the pH of the emulsion was adjusted to be 8 by adding 10 weight % aqueous ammonia.

In this way, the emulsion of the acrylic polymer was prepared. The average particle size of the acrylic polymer was 100 nm.

### Production Example 2

### (Preparation of Emulsion of Acrylic Polymer)

A monomer pre-emulsion was prepared and subsequently, an acrylic polymer was obtained in the same manner as in Production Example 1, except that 63.5 parts by weight of butyl acrylate. 34.5 parts by weight of isobornyl acrylate, 2.0 parts by weight of methacrylic acid, and 0.05 parts by weight of 3-methacryloyloxypropyl-trimethoxysilane were blended instead of 65.0 parts by weight of butyl acrylate, 34.5 parts by weight of methyl methacrylate, and 0.5 parts by weight of methacrylic acid.

The mixing formulation of the monomer components, the emulsifiers, and the initiators in Production Examples is shown in Table 1.

[Table 1]

**Table 1**

| -Mixing Formulation of Acrylic Copolymer [Parts by Weight] | | | Production Ex. 1 | Production Ex.2 |
|---|---|---|---|---|
| | Alkyl (meth)acrylate | Butyl Acrylate | 65.0 | 63.5 |
| | | Methyl Methacrylate | 34.5 | - |
| Monomer Component | | Isobomyl Acrylate | - | 34.5 |
| | Copolymerizable Vinyl Monomer | Methacrylic Acid | 0.5 | 2.0 |
| | | 3-Methacryloyloxypropyl-Trimethoxysilane | - | 0.05 |
| Emulsifier | Anionic-Based | LA-16 | 1.0 | 1.0 |
| | | | 2.0 | 2.0 |
| Initiator | Persulfate-Based | Ammonium Persulfate | 0.10 | 0.10 |

### Production Example 3

### (Preparation of Pressure-Sensitive Adhesive Composition)

In a reaction vessel equipped with a condenser tube, a nitrogen introducing tube, a thermometer, and a stirrer, 100 parts of water and 1.5 parts by weight of polyoxyethylene sodium lauryl sulfate were added. Furthermore, 100 parts by weight of butyl acrylate, 4 parts by weight of acrylic acid, 0.05 parts by weight of 3-methacryloxypropyl-trimethoxysilane (KBM-503, manufactured by Shin-Etsu Chemical Co., Ltd.), 0.1 parts by weight of 2.2'-azobis[2-(2-imidazolin-2-yl)propane]dihydrochloride, and 0.05 parts by weight of 1-dodecanethiol were added thereto and the monomer component was emulsion polymerized at 60°C. Thereafter, 10 weight % aqueous ammonia was added to the obtained mixture and the pH was adjusted to be 8, so that an emulsion of an acrylic polymer with the concentration of solid content of 57 weight % was prepared.

Thereafter, 0.1 parts by weight of a silane coupling agent (KBM-903, γ-aminopropyltrimethoxysilane, manufactured by Shin-Etsu Chemical Co., Ltd.) and 30 parts by weight of a rosin-based tackifier (Super Ester E-100, manufactured by Arakawa Chemical Industries, Ltd.) were added to 100 parts by weight of the solid content of the emulsion of the acrylic polymer, so that the pressure-sensitive adhesive composition was prepared as an emulsion of the acrylic polymer.

### Production Example 4

### (Preparation of Pressure-Sensitive Adhesive Composition)

93 parts by weight of butyl acrylate, 3 parts by weight of acrylic acid, 4 parts by weight of vinyl acetate, and 200 parts by weight of toluene were put in a three-necked flask and the obtained mixture was stirred for 2 hours while introducing a nitrogen gas thereto. Thereafter, 0.15 parts by weight of AIBN was added thereto and the temperature was increased to 70°C, so that the monomer component was subjected to solution polymerization for 6 hours. Then, 40 parts by weight of a rosin-based tackifier (Pensel D125, manufactured by Arakawa Chemical Industries, Ltd.) was added to 100 parts by weight of the solid content of a toluene solution of the obtained acrylic polymer; furthermore, 1.4 parts by weight of an isocyanate-based cross-linking agent (Colonate L, manufactured by NIPPON POLYURETHANE INDUSTRY CO., LTD.) was blended to 100 parts by weight of the solid content of the acrylic polymer; and moreover, toluene was appropriately added thereto, so that the pressure-sensitive adhesive composition was prepared as a toluene solution of the acrylic polymer with the concentration of solid content of 35 weight %.

### Example 1

### (Preparation of Primer Composition)

10 parts by weight (5 parts by weight by solid content conversion) of ADELITE AT-50 (an aqueous colloidal silica, an average particle size of 40 nm, a concentration of solid content of 50 weight %, manufactured by ADEKA CORPORATION) was blended to 100 parts by weight of the solid content of the emulsion of the acrylic polymer in Production Example 1. Thereafter, water was added so that the concentration of solid content of the total amount of the acrylic polymer and ADELITE A-50 was 35 weight %. In this way, a primer composition was prepared.

### (Production of Pressure-Sensitive Adhesive Sheet)

Using a wire bar No. 5, the above-described primer composition was uniformly applied to the surface, which was left untreated, of a PET sheet (Lumirror S10, #38, manufactured by TORAY INDUSTRIES, INC.) having a thickness of 38 µm to form a coating film. Thereafter, the obtained coating film was heated at 100°C for 1 minute to be dried, so that a primer layer having a thickness of 1.75 µm was formed.

Separately, the pressure-sensitive adhesive composition in Production Example 3 was applied to the surface of a release sheet (MRF 38, manufactured by MITSUBISHI CHEMICAL CORPORATION) to which a silicone-based release agent was applied and the applied surface was dried, so that a pressure-sensitive adhesive layer having a thickness of 23 µm was laminated on the surface of the release sheet.

Next, the pressure-sensitive adhesive layer was attached to the primer layer and then, the release sheet was peeled from the pressure-sensitive adhesive layer, so that the pressure-sensitive adhesive layer was provided on the surface of the primer layer.

In this way, a pressure-sensitive adhesive sheet was produced.

### Example 2

A primer layer having a thickness of 1.75 µm was formed and subsequently, a pressure-sensitive adhesive sheet was produced in the same manner as in Example 1, except that in the preparation of the primer composition, the number of blended parts of ADELITE AT-50 (an aqueous colloidal silica) with respect to 100 parts by weight of the solid content of the emulsion of the acrylic polymer was changed to 50 parts by weight (25 parts by weight by solid content conversion).

### Example 3

A primer layer having a thickness of 1.75 µm was formed and subsequently, a pressure-sensitive adhesive sheet was produced in the same manner as in Example 1, except that in the preparation of the primer composition, the number of blended parts of ADELITE AT-50 (an aqueous colloidal silica) with respect to 100 parts by weight of the solid content of the emulsion of the acrylic polymer was changed to 100 parts by weight (50 parts by weight by solid content conversion).

### Example 4

A primer layer having a thickness of 1.75 µm was formed and subsequently, a pressure-sensitive adhesive sheet was produced in the same manner as in Example 1, except that in the preparation of the primer composition, the number of blended parts of ADELITE AT-50 (an aqueous colloidal silica) with respect to 100 parts by weight of the solid content of the emulsion of the acrylic polymer was changed to 170 parts by weight (85 parts by weight by solid content conversion).

### Example 5

A primer layer having a thickness of 1.75 µm was formed and subsequently, a pressure-sensitive adhesive sheet was produced in the same manner as in Example 1, except that in the preparation of the primer composition, the number of blended parts of ADELITE AT-50 (an aqueous colloidal silica) with respect to 100 parts by weight of the solid content of the emulsion of the acrylic polymer was changed to 200 parts by weight (100 parts by weight by solid content conversion).

### Example 6

A primer layer having a thickness of 1.75 µm was formed and subsequently, a pressure-sensitive adhesive sheet was produced in the same manner as in Example 1, except that in the preparation of the primer composition, the number of blended parts of ADELITE AT-50 (an aqueous colloidal silica) with respect to 100 parts by weight of the solid content of the emulsion of the acrylic polymer was changed to 400 parts by weight (200 parts by weight by solid content conversion).

### Example 7

A primer layer having a thickness of 1.75 µm was formed and subsequently, a pressure-sensitive adhesive sheet was produced in the same manner as in Example 1, except that in the preparation of the primer composition, the number of blended parts of ADELITE AT-50 (an aqueous colloidal silica) with respect to 100 parts by weight of the solid content of the emulsion of the acrylic polymer was changed to 600 parts by weight (300 parts by weight by solid content conversion).

### Example 8

A primer layer having a thickness of 1 µm was formed and subsequently, a pressure-sensitive adhesive sheet was produced in the same manner as in Example 1, except that in the preparation of the primer composition, the concentration of solid content of the total amount of the acrylic polymer and ADELITE AT-50 was changed to 10 weight %.

### Example 9

A primer layer having a thickness of 1.75 µm was formed and subsequently, a pressure-sensitive adhesive sheet was produced in the same manner as in Example 1, except that in the preparation of the primer composition, MP-1040 (an aqueous colloidal silica, an average particle size of 100 nm, a concentration of solid content of 40 weight %, manufactured by NISSAN CHEMICAL INDUSTRIES, LTD.) was used instead of ADELITE AT-50 (an aqueous colloidal silica) and the mixing ratio of the MP-1040 with respect to 100 parts by weight of the solid content of the emulsion of the acrylic polymer was changed to 212.5 parts by weight (85 parts by weight by solid content conversion).

### Example 10

A primer layer having a thickness of 1.75 µm was formed and subsequently, a pressure-sensitive adhesive sheet was produced in the same manner as in Example 1, except that in the preparation of the primer composition, MP-2040 (an aqueous colloidal silica, an average particle size of 200 nm, a concentration of solid content of 40 weight %, manufactured by NISSAN CHEMICAL INDUSTRIES, LTD.) was used instead of ADELITE AT-50 (an aqueous colloidal silica) and the mixing ratio of the MP-2040 with respect to 100 parts by weight of the solid content of the emulsion of the acrylic polymer was changed to 212.5 parts by weight (85 parts by weight by solid content conversion).

### Example 11

A primer layer having a thickness of 1.25 µm was formed and subsequently, a pressure-sensitive adhesive sheet was produced in the same manner as in Example 1, except that in the preparation of the primer composition, SN-100D (an ATO aqueous dispersion, an average particle size of 10 to 30 nm, a concentration of solid content of 30 weight %, manufactured by ISHIHARA SANGYO KAISHA, LTD.) was blended instead of ADELITE AT-50 (an aqueous colloidal silica) and the mixing ratio of the SN-100D with respect to 100 parts by weight of the solid content of the emulsion of the acrylic polymer was changed to 283.3 parts by weight (85 parts by weight by solid content conversion).

### Example 12

A primer layer having a thickness of 1.25 µm was formed and subsequently, a pressure-sensitive adhesive sheet was produced in the same manner as in Example 1, except that in the preparation of the primer composition, TTO-W-5 (a titania sol, an average particle size of 10 nm, a concentration of solid content of 30 weight %, manufactured by ISHIHARA SANGYO KAISHA, LTD.) was blended instead of ADELITE AT-50 (an aqueous colloidal silica) and the mixing ratio of the TTO-W-5 with respect to 100 parts by weight of the solid content of the emulsion of the acrylic polymer was changed to 283.3 parts by weight (85 parts by weight by solid content conversion).

### Example 13

### (Preparation of Primer Composition)

175 parts by weight (85 parts by weight by solid content conversion) of ADELITE AT-50 (an aqueous colloidal silica, an average particle size of 40 nm, a concentration of solid content of 50 weight %, manufactured by ADEKA CORPORATION) was blended to 100 parts by weight of the solid content of the emulsion of the acrylic polymer in Production Example 1. Thereafter, water was added so that the concentration of solid content of the total amount of the acrylic polymer and ADELITE AT-50 was 35 weight %. In this way, a primer composition was prepared.

### (Production of Pressure-Sensitive Adhesive Sheet)

Using a wire bar No. 5, the above-described primer composition was uniformly applied to the surface, which was left untreated, of a PET sheet (Lumirror S10, #38, manufactured by TORAY INDUSTRIES, INC.) having a thickness of 38 µm to form a coating film. Thereafter, the obtained coating film was heated at 100°C for 1 minute to be dried, so that a primer layer having a thickness of 1.75 µm was formed.

Separately, the pressure-sensitive adhesive composition (a solvent type) in Production Example 4 was applied to the surface of a release sheet (MRF 38, manufactured by MITSUBISHI CHEMICAL CORPORATION) to which a silicone-based release agent was applied and the applied surface was dried, so that a pressure-sensitive adhesive layer having a thickness of 85 µm was laminated on the surface of the release sheet.

Next, the pressure-sensitive adhesive layer was attached to the primer layer and then, the release sheet was peeled from the pressure-sensitive adhesive layer, so that the pressure-sensitive adhesive layer was provided on the surface of the primer layer.

In this way, a pressure-sensitive adhesive sheet was produced.

### Example 14

10 parts by weight (5 parts by weight by solid content conversion) of ADELITE AT-50 (an aqueous colloidal silica) was blended to 100 parts by weight of the solid content of the emulsion of the acrylic polymer in Production Example 2. Thereafter, water was added so that the concentration of solid content of the total amount of the acrylic polymer and ADELITE AT-50 was 35 weight %. In this way, a primer composition was prepared.

### (Production of Pressure-Sensitive Adhesive Sheet)

Using a wire bar No. 5, the above-described primer composition was uniformly applied to the surface, which was left untreated, of a PET sheet (Lumirror S10, #38, manufactured by TORAY INDUSTRIES, INC.) having a thickness of 38 µm to form a coating film. Thereafter, the obtained coating film was heated at 100°C for 1 minute to be dried, so that a primer layer having a thickness of 1.75 µm was formed.

Separately, the pressure-sensitive adhesive composition in Production Example 3 was applied to the surface of release sheet (MRF 38. manufactured by MITSUBISHI CHEMICAL CORPORATION) to which a silicone-based release agent was applied and the applied surface was dried, so that a pressure-sensitive adhesive layer having a thickness of 23 µm was laminated on the surface of the release sheet.

Next, the pressure-sensitive adhesive layer was attached to the primer layer and then, the release sheet was peeled from the pressure-sensitive adhesive layer, so that the pressure-sensitive adhesive layer was provided on the surface of the primer layer.

In this way, a pressure-sensitive adhesive sheet was produced.

### Example 15

A primer layer having a thickness of 1.75 µm was formed and subsequently, a pressure-sensitive adhesive sheet was produced in the same manner as in Example 14, except that in the preparation of the primer composition, the number of blended parts of ADELITE AT-50 (an aqueous colloidal silica) with respect to 100 parts by weight of the solid content of the emulsion of the acrylic polymer was changed to 20 parts by weight (10 parts by weight by solid content conversion).

### Example 16

A primer layer having a thickness of 1.75 µm was formed and subsequently, a pressure-sensitive adhesive sheet was produced in the same manner as in Example 14, except that in the preparation of the primer composition, the number of blended parts of ADELITE AT-50 (an aqueous colloidal silica) with respect to 100 parts by weight of the solid content of the emulsion of the acrylic polymer was changed to 50 parts by weight (25 parts by weight by solid content conversion).

### Example 17

A primer layer having a thickness of 1.75 µm was formed and subsequently, a pressure-sensitive adhesive sheet was produced in the same manner as in Example 14, except that in the preparation of the primer composition, the number of blended parts of ADELITE AT-50 (an aqueous colloidal silica) with respect to 100 parts by weight of the solid content of the emulsion of the acrylic polymer was changed to 100 parts by weight (50 parts by weight by solid content conversion).

### Example 18

A primer layer having a thickness of 1.75 jim was formed and subsequently, a pressure-sensitive adhesive sheet was produced in the same manner as in Example 14, except that in the preparation of the primer composition, the number of blended parts of ADELITE AT-50 (an aqueous colloidal silica) with respect to 100 parts by weight of the solid content of the emulsion of the acrylic polymer was changed to 130 parts by weight (65 parts by weight by solid content conversion).

### Example 19

A primer layer having a thickness of 1.75 µm was formed and subsequently, a pressure-sensitive adhesive sheet was produced in the same manner as in Example 14, except that in the preparation of the primer composition, the number of blended parts of ADELITE AT-50 (an aqueous colloidal silica) with respect to 100 parts by weight of the solid content of the emulsion of the acrylic polymer was changed to 150 parts by weight (75 parts by weight by solid content conversion).

### Example 20

A primer layer having a thickness of 1.75 µm was formed and subsequently, a pressure-sensitive adhesive sheet was produced in the same manner as in Example 14, except that in the preparation of the primer composition, the number of blended parts of ADELITE AT-50 (an aqueous colloidal silica) with respect to 100 parts by weight of the solid content of the emulsion of the acrylic polymer was changed to 160 parts by weight (80 parts by weight by solid content conversion).

### Example 21

A primer layer having a thickness of 1.75 µm was formed and subsequently, a pressure-sensitive adhesive sheet was produced in the same manner as in Example 14, except that in the preparation of the primer composition, the number of blended parts of ADELITE AT-50 (an aqueous colloidal silica) with respect to 100 parts by weight of the solid content of the emulsion of the acrylic polymer was changed to 170 parts by weight (85 parts by weight by solid content conversion).

### Example 22

A primer layer having a thickness of 1.75 µm was formed and subsequently, a pressure-sensitive adhesive sheet was produced in the same manner as in Example 14, except that in the preparation of the primer composition, the number of blended parts of ADELITE AT-50 (an aqueous colloidal silica) with respect to 100 parts by weight of the solid content of the emulsion of the acrylic polymer was changed to 180 parts by weight (90 parts by weight by solid content conversion).

### Example 23

A primer layer having a thickness of 1.75 µm was formed and subsequently, a pressure-sensitive adhesive sheet was produced in the same manner as in Example 14, except that in the preparation of the primer composition, the number of blended parts of ADELITE AT-50 (an aqueous colloidal silica) with respect to 100 parts by weight of the solid content of the emulsion of the acrylic polymer was changed to 200 parts by weight (100 parts by weight by solid content conversion).

### Example 24

A primer layer having a thickness of 1.75 µm was formed and subsequently, a pressure-sensitive adhesive sheet was produced in the same manner as in Example 14, except that in the preparation of the primer composition, the number of blended parts of ADELITE AT-50 (an aqueous colloidal silica) with respect to 100 parts by weight of the solid content of the emulsion of the acrylic polymer was changed to 300 parts by weight (150 parts by weight by solid content conversion).

### Example 25

A primer layer having a thickness of 1.75 µm was formed and subsequently, a pressure-sensitive adhesive sheet was produced in the same manner as in Example 14, except that in the preparation of the primer composition, the number of blended parts of ADELITE AT-50 (an aqueous colloidal silica) with respect to 100 parts by weight of the solid content of the emulsion of the acrylic polymer was changed to 400 parts by weight (200 parts by weight by solid content conversion).

### Example 26

A primer layer having a thickness of 1.75 µm was formed and subsequently, a pressure-sensitive adhesive sheet was produced in the same manner as in Example 14, except that in the preparation of the primer composition, the number of blended parts of ADELITE AT-50 (an aqueous colloidal silica) with respect to 100 parts by weight of the solid content of the emulsion of the acrylic polymer was changed to 600 parts by weight (300 parts by weight by solid content conversion).

### Comparative Example 1

A primer layer having a thickness of 1.75 µm was formed and subsequently, a pressure-sensitive adhesive sheet was produced in the same manner as in Example 1, except that in the preparation of the primer composition, ADELITE AT-50 (an aqueous colloidal silica) was not blended.

### Comparative Example 2

A primer layer having a thickness of 1.75 µm was formed and subsequently, a pressure-sensitive adhesive sheet was produced in the same manner as in Example 14, except that in the preparation of the primer composition. ADELITE AT-50 (an aqueous colloidal silica) was not blended.

The mixing formulation of the components of the primer compositions in Examples and Comparative Examples is shown in Tables 2 to 4.

### (Evaluation)

### (Peel Test)

### (1) Normal Temperature and Normal Humidity Atmosphere

The pressure-sensitive adhesive sheets in Examples and Comparative Examples were cut into pieces each having a width of 25 mm and a length of 100 mm to prepare samples. The pressure-sensitive adhesive layer of each of the samples was attached to the primer layer formed by applying RC-1023 (manufactured by LORD Corporation) to a PET substrate. After the elapse of a few minutes, the attached layers were compressively bonded to each other using a 2-kg roller and the state thereof when peeled off under the following peeling conditions was observed visually and evaluated. Also, the adhesive force thereof at the time of peeling was measured.

That is, the peeling was conducted as a 180-degree peel test under a room temperature (23°C) atmosphere at a cross-head speed (a peeling rate) of 300 mm/min using a universal tensile testing machine (TCM-1kNB. manufactured by Minebea Co.. Ltd.).

### (2) High Temperature and High Humidity Atmosphere

The pressure-sensitive adhesive sheets in Examples and Comparative Examples were cut into pieces each having a width of 25 mm and a length of 100 mm to prepare samples. The obtained samples were allowed to stand in a constant temperature and high humidity chamber at 40°C and 92 %RH for 1 week. Thereafter, each of the samples was taken out and was attached to the primer layer in the same manner as in the above-described (1). Then, 180-degree peel test was conducted.

The results are shown in Tables 2 to 4.

[Table 2]

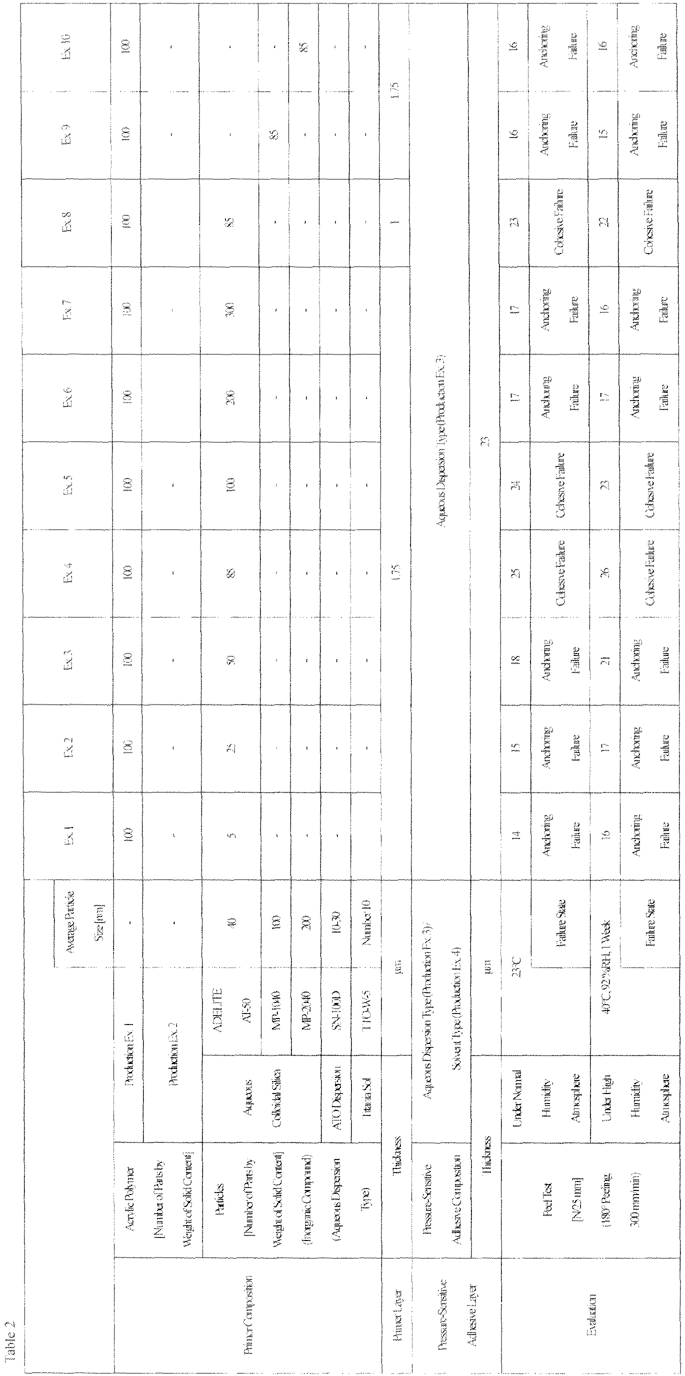

[Table 3]

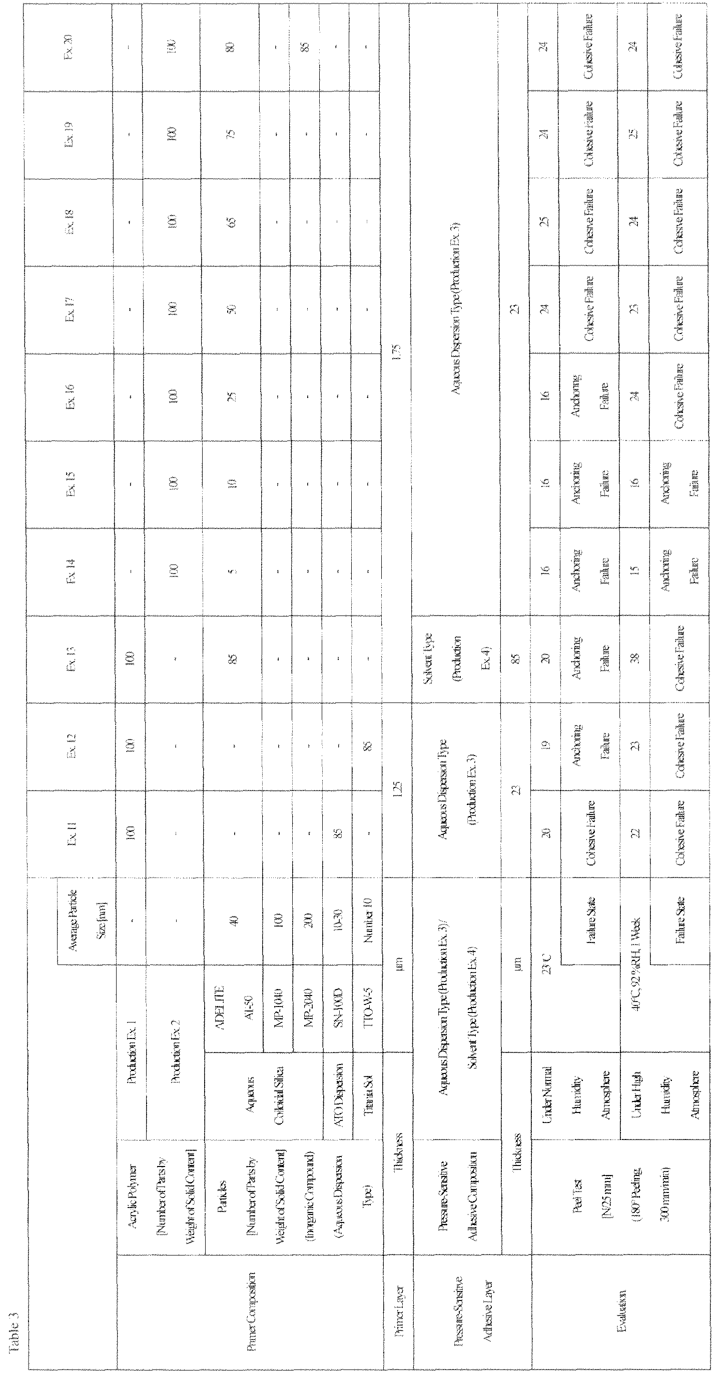

[Table 4]

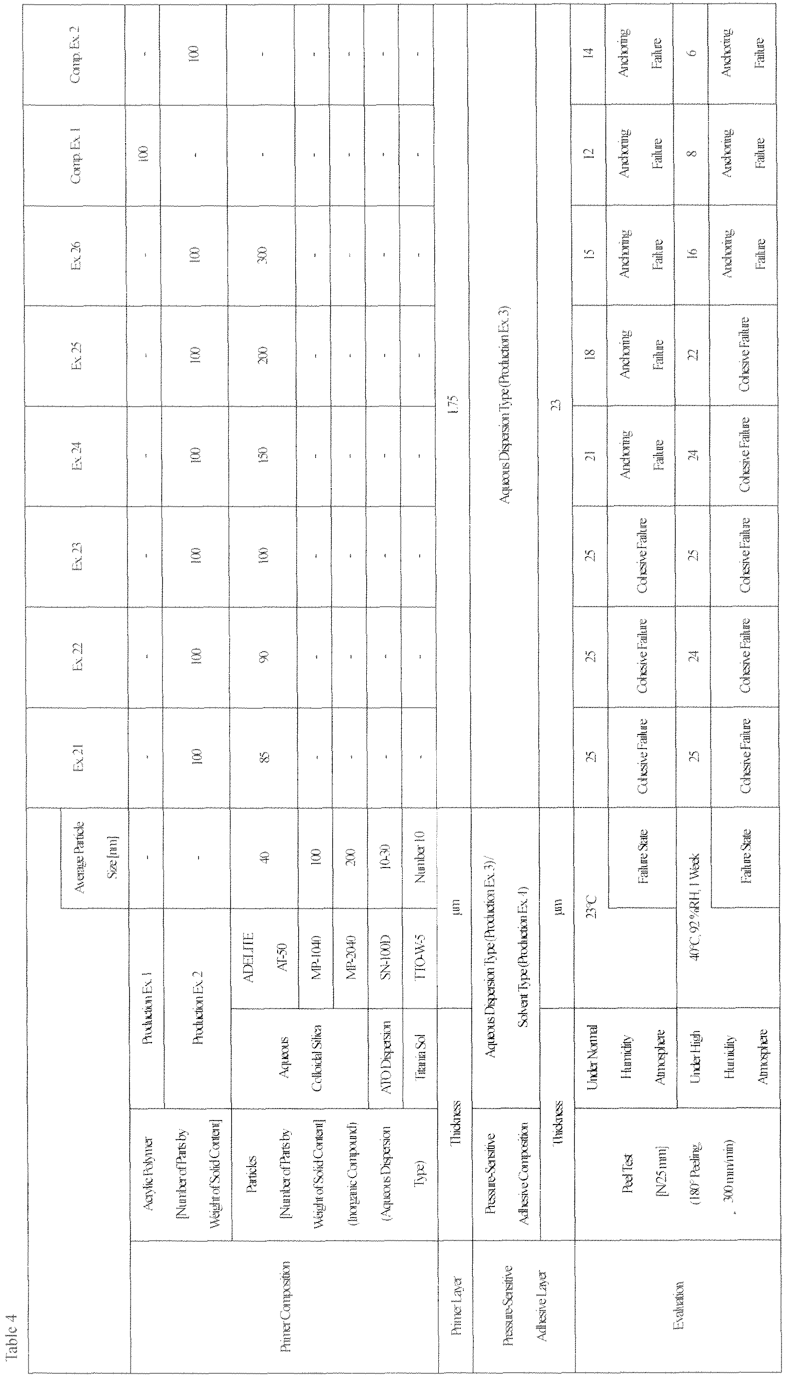

## Claims

1. A pressure-sensitive adhesive sheet comprising:
a substrate,
a primer layer laminated on the surface of the substrate and formed from a primer composition, and
a pressure-sensitive adhesive layer laminated on the surface of the primer layer, wherein the primer composition comprises:
an acrylic polymer which contains, as the primary monomer component, an alkyl (meth)acrylate containing an alkyl group having 1 to 30 carbon atoms, and
particles.

2. The pressure sensitive sheet according to claim 1, wherein
the mixing ratio of the particles with respect to 100 parts by weight of the solid content of the acrylic polymer is 25 to 200 parts by weight.

3. The pressure sensitive sheet according to claim 1, wherein
the average particle size of each of the particles is 200 nm or less.

4. The pressure sensitive sheet according to claim 1, wherein
the acrylic polymer is an aqueous dispersion type.

5. The pressure sensitive sheet according to claim 1, wherein
the particles are an aqueous dispersion type.

6. The pressure sensitive sheet according to claim 1, wherein
the particles are made of at least one inorganic compound selected from the group consisting of silica, alumina, antimony-doped tin oxide, and titanium oxide.

7. The pressure-sensitive adhesive sheet according to claim 1, wherein
the pressure-sensitive adhesive layer is formed from a pressure-sensitive adhesive composition comprising an acrylic polymer which contains, as the primary monomer component, an alkyl (meth)acrylate containing an alkyl group having 4 to 18 carbon atoms.

## Patentansprüche

1. Druckempfindliche Klebefolie, umfassend:
ein Substrat,
eine Primerschicht, die auf die Oberfläche des Substrats laminiert ist, und die aus einer Primerzusammensetzung gebildet ist, und
eine druckempfindliche Klebeschicht, die auf die Oberfläche der Primerschicht laminiert ist, wobei die Primerzusammensetzung umfasst:
ein Acrylpolymer, das als die hauptsächliche Monomerkomponente ein Alkyl(meth)acrylat, enthaltend eine Alkylgruppe, die 1 bis 30 Kohlenstoffatome besitzt, enthält, und
Partikel.

2. Die druckempfindliche Folie gemäß Anspruch 1, wobei
das Mischungsverhältnis der Partikel in Bezug auf 100 Gew.-Teile des Feststoffanteils des Acrylpolymers 25 bis 200 Gew.-Teile ist.

3. Die druckempfindliche Folie gemäß Anspruch 1, wobei
die durchschnittliche Partikelgröße von jedem der Partikel 200 nm oder weniger ist.

4. Die druckempfindliche Folie gemäß Anspruch 1, wobei
das Acrylpolymer vom Typ einer wässrigen Dispersion ist.

5. Die druckempfindliche Folie gemäß Anspruch 1, wobei
die Partikel vom Typ einer wässrigen Dispersion sind.

6. Die druckempfindliche Folie gemäß Anspruch 1, wobei
die Partikel aus mindestens einer inorganischen Verbindung gemacht sind, ausgewählt aus der Gruppe, bestehend aus Siliziumoxid, Aluminiumoxid, mit Antimon-dotiertes Zinnoxid, und Titanoxid.

7. Die druckempfindliche Klebefolie gemäß Anspruch 1, wobei
die druckempfindliche Klebeschicht aus einer druckempfindlichen Klebezusammensetzung gebildet ist, umfassend ein Acrylpolymer, das als die hauptsächliche Monomerkomponente ein Alkyl(meth)acrylat, enthaltend eine Alkylgruppe, die 4 bis 18 Kohlenstoffatome besitzt, enthält.

## Revendications

1. Feuille adhésive sensible à la pression comprenant :
un substrat,
une couche d'amorçage stratifiée sur la surface du substrat et formée à partir d'une composition d'amorçage, et
une couche adhésive sensible à la pression stratifiée sur la surface de la couche d'amorçage, la composition d'amorçage comprenant :
un polymère acrylique qui contient, en tant que principal composant monomère, un (méth)acrylate d'alkyle contenant un groupe alkyle ayant 1 à 30 atomes de carbone, et
des particules.

2. Feuille adhésive sensible à la pression selon la revendication 1, dans laquelle
le rapport de mélange des particules pour 100 parties en poids des matières solides du polymère acrylique est de 25 à 200 parties en poids.

3. Feuille adhésive sensible à la pression selon la revendication 1, dans laquelle
la taille particulaire moyenne de chacune des particules est de 200 nm ou moins.

4. Feuille adhésive sensible à la pression selon la revendication 1, dans laquelle
le polymère acrylique est un type en dispersion aqueuse.

5. Feuille adhésive sensible à la pression selon la revendication 1, dans laquelle
les particules sont un type en dispersion aqueuse.

6. Feuille adhésive sensible à la pression selon la revendication 1, dans laquelle
les particules sont faites d'au moins un composé inorganique sélectionné dans le groupe constitués par la silice, l'alumine, l'oxyde d'étain dopé à l'antimoine, et l'oxyde de titane.

7. Feuille adhésive sensible à la pression selon la revendication 1, dans laquelle
la couche adhésive sensible à la pression est formée à partir d'une composition adhésive sensible à la pression comprenant un polymère acrylique qui contient, en tant que principal composant monomère, un (méth)acrylate d'alkyle contenant un groupe alkyle ayant 4 à 18 atomes de carbone.
